# EUROPÄISCHE PATENTSCHRIFT

(11) **EP 1 488 986 B1**
(45) Veröffentlichungstag und Bekanntmachung des Hinweises auf die Patenterteilung: **05.07.2006**
(21) Anmeldenummer: 04010268.3
(22) Anmeldetag: 30.04.2004
(51) Int. Cl.: B62D 25/06, B62D 65/00

(54) **Kraftfahrzeug mit einer Verbindungsanordnung im Dachbereich**
Vehicle with a roof connection assembly
Véhicule avec un agencement de connexion pour un toit

(30) Priorität: 17.06.2003 DE 10327194
(43) Veröffentlichungstag der Anmeldung: 22.12.2004
(73) Patentinhaber: Volkswagen Aktiengesellschaft, 38436 Wolfsburg (DE)
(72) Erfinder: Schulze, Hilmar, 39365 Marienborn (DE); Walter, Christoph, 38536 Meinersen (DE)

(56) Entgegenhaltungen:
- EP-A- 1 132 281
- WO-A-01/94141

## Beschreibung

Die Erfindung betrifft eine Verbindungsanordnung im Dachbereich eines Personenkraftwagens nach dem Oberbegriff des Anspruchs 1.

Fahrzeugdächer mit Ausschnitten für Sonderdächer, wie Schiebedächer, Faltdächer, Panoramadächer, Aufstelldächer u. dgl. sind seit langem bekannt. Durch den Ausschnitt in der Dachhaut ist an sich eine Schwächung derselben bzw. der Dachstruktur zu verzeichnen, die demgemäß umfangreiche Maßnahmen erfordert um dieselbe zu kompensieren. Hierfür haben sich insbesondere sogenannte Verstärkungsrahmen bewährt, die im gewünschten Bereich des Dachausschnittes angeordnet und zur Aufnahme besagter Sonderdächer ausgebildet sind.

Mit der DE 195 38 229 A1 wird beispielsweise eine obere Karosseriestruktur für Fahrzeugkarosserien offenbart, die ihrerseits Dachseitenschienen umfaßt, welche an gegenüberliegenden Seiten einer Dachstruktur angeordnet und an oberen Enden derselben, wie Dachpfosten, auch als Säulen bezeichnet, befestigt sind, wobei jede der Dachseitenschienen in einem geschlossenen Querschnitt geformt ist und sich in Fahrzeuglängsrichtung erstreckt und mindestens ein vertikales und ein horizontales Schienenteil aufweist sowie mit einer Vielzahl Befestigungshalterungen für in Fahrzeugquerrichtung angeordnete Dachverstärkungselemente versehen ist.

Des Weiteren ist aus der EP 0 455 975 B1 ein Rahmen für ein Fahrzeugschiebedach oder -Schiebehebedach bekannt, der seinerseits in eine in einer festen Dachfläche eines Fahrzeugs vorgesehene Dachöffnung einsetzbar ist und eine Rahmenöffnung begrenzt, wobei der Rahmen zwei parallel zur Längsachse des Fahrzeugs verlaufende, im Querabstand angeordnete und aus Metall bestehende Seitenteile, ein Vorderteil und wenigstens ein Querteil aufweist und das Vorderteil als Übergang zu den Seitenteilen Eckbereiche aufweist.

Weiterhin beschreibt EP 1 132 281 A ein Kraflfahrzeug mit einer Verbindungsanordnung> im Dachbereich gemäß dem Oberbegriff des Anspruchs 1.

Den vorstehenden Rahmen bzw. Verstärkungsrahmen ist gemein, dass sie jeweils fahrzeugtypspezifisch ausgelegt sind, d. h., für eine 2-türige und eine 4-türige Ausstattung eines bestimmten an sich baugleichen Fahrzeugmodells werden beispielsweise aufgrund der verschiedenen Strakkrümmung des Daches unterschiedliche Verstärkungsrahmen bereitgestellt, die zu erhöhten Kosten in einer Serienfertigung führen. Ferner sind in Abhängigkeit von der gewählten Ausstattung (2- oder 4-Türer) diverse Adapterbleche notwendig, um Kräfte infolge eines Seitencrashs aufnehmen zu können.

Hier setzt die nachfolgende Erfindung an.

Aufgabe der Erfindung ist es, eine verbesserte und kostengünstige Verbindungsanordnung im Dachbereich eines Personenkraftwagens zwischen einem Verstärkungsrahmen für ein Sonderdach und der Kraftfahrzeugkarosserie zu schaffen, die zum einen sowohl für eine 2-türige als auch eine 4-türige Ausstattung eines gleichen oder vergleichbaren Fahrzeugmodels Anwendung finden kann und zum anderen einen hohen Crashwiderstand gewährleistet.

Erfindungsgemäß wird die Aufgabe in Verbindung mit den Merkmalen im Oberbegriff des Anspruchs 1 dadurch gelöst, dass äußere Längsträger des Verstärkungsrahmens jeweils in einem Bereich, der sich über einen Anbindungsbereich "I" an die Kraftfahrzeugkarosserie in Höhe einer B-Säule sowohl einer 2-türigen als auch einer 4-türigen Ausstattung eines gleichen oder vergleichbaren Fahrzeugmodells erstreckt, mit sickenförmig ausgebildeten Auflageflächen versehen sind, deren rinnenförmige Vertiefungen in Fahrzeugquerrichtung weisen, wobei sich wenigstens eine der Auflageflächen auf wenigstens einer zur Fahrzeugmitte hin abgestellten korrespondierenden sickenförmigen Auflagefläche der Kraftfahrzeugkarosserie der 2-türigen respektive der 4-türigen Ausstattung formschlüssig abstützt.

Gemäß einer vorteilhaften Ausgestaltung der Erfindung sind die korrespondierenden Auflageflächen der Kraftfahrzeugkarosserie durch die B-Säule und/oder innere Seitenteile gebildet.

Eine weitere Ausgestaltung der Erfindung sieht vor, dass die aktuell miteinander korrespondierenden Auflageflächen untereinander durch Stoffschluß, wie schweißen und/oder kleben, und/oder vermittels mechanischer Befestigungsmittel und/oder infolge Formschluß verbunden sind.

Des Weiteren ist vorgesehen, dass die Auflageflächen der Längsträger des Verstärkungsrahmens und die Auflageflächen der Kraftfahrzeugkarosserie derart zueinander angeordnet sind, dass im Falle eines Crashereignisses und einer daraus resultierenden Relativbewegung der ursprünglich miteinander korrespondierenden Auflageflächen zueinander in Fahrzeuglängsrichtung, die Auflageflächen der Kraftfahrzeugkarosserie, Crashenergie verzehrend, in die ursprünglich freien sickenförmig ausgebildeten Auflageflächen der Längsträger des Verstärkungsrahmens formschlüssig eingreifen.

Wie die Erfindung noch vorsieht, verfügen die Längsträger des Verstärkungsrahmens und/oder die Kraftfahrzeugkarosserie über den Anbindungsbereich "I" hinaus über sickenförmig ausgebildete Auflageflächen, die im Falle eines Crashereignisses infolge einer Relativbewegung mit den innerhalb des Anbindungsbereiches "I" angeordneten Auflageflächen oder untereinander in Formschluß treten.

Ferner wird vorgeschlagen, dass dem Verstärkungsrahmen wenigstens im Anbindungsbereich "I" der 2-türigen und 4-türigen Ausstattung ein weiteres Querträgerelement zugeordnet ist.

Als zweckmäßig wird weiterhin angesehen, dass dem Verstärkungsrahmen im Bereich seines vorderen Querträgers ein oder mehrere Auflageflächen/-laschen zugeordnet sind, die sich ihrerseits auf korrespondierenden Auflageflächen/-laschen des vorderen Dachrahmenquerträgerelementes des Dachrahmens abstützen. Ebenso kann es angezeigt sein, dem Verstärkungsrahmen im hinteren Bereich der äußeren Längsträger desselben ein oder mehrere Auflageflächen/-laschen zuzuordnen, die sich ihrerseits auf korrespondierenden Auflageflächen/-laschen der Dachrahmenlängsträgerelemente der Kraftfahrzeugkarosserie abstützen.

Schließlich wird vorgeschlagen, dass der Verstärkungsrahmen offene und/oder geschlossene Hohlprofilquerschnitte aufweist und ein- oder mehrteilig ausgebildet und aus Metall und/oder aus Kunststoff gefertigt ist.

Die vorgeschlagene Verbindungsanordnung hat im Hinblick auf herkömmliche Verbindungsanordnungen mehrere Vorteile. Zum einen wird in Erfüllung der gestellten Aufgabe eine Verbindungsanordnung zwischen einem Verstärkungsrahmen für Sonderdächer und der Kraftfahrzeugkarosserie eines Personenkraftwagens geschaffen, die sowohl für eine 2-türige als auch eine 4-türige Ausstattung eines gleichen oder vergleichbaren Fahrzeugmodels Anwendung finden kann und ferner einen hohen Crashwiderstand, insbesondere auch in Fahrzeugquerrichtung, gewährleistet, zum anderen sind herstellerseitig erhebliche Kostensenkungen, resultierend aus einer Vereinheitlichung der Verstärkungsrahmen und der Vereinheitlichung der Anbindung eines solchen an die Kraftfahrzeugkarosserie zu verzeichnen, indem der kostenträchtige Steuerungsaufwand im Montageprozeß, der an sich mit unterschiedlichen Verstärkungsrahmen und mit der unterschiedlichen Anordnung der B-Säulen von 2- und 4-Türern eines gleichen oder vergleichbaren Fahrzeugmodels einhergeht, vermieden wird, da identische Dachöffnungssysteme, Montagekonzepte etc. Anwendung finden können. Schlußendlich ist eine in der Serienfertigung angestrebte Teilereduzierung zu verzeichnen, da auf Zusatzteile, wie Adapterbleche o.a. verzichtet werden kann.

Die Erfindung wird nachstehend anhand der in den Zeichnungen schematisch dargestellten Ausführungsbeispiele näher erläutert. Es zeigen:
- Figur 1: die perspektivische Darstellung der erfindungsgemäßen Verbindungsanordnung im Dachbereich eines Personenkraftwagens am Beispiel einer 2-türigen Ausstattung eines beliebigen Fahrzeugmodells,
- Figur 2: die Verbindungsanordnung nach Fig. 1 am Beispiel einer 4-türigen Ausstattung eines gleichen oder vergleichbaren Fahrzeugmodells,
- Figur 3: die überlappende Darstellung der Verbindungsanordnung der 2- und 4-türigen Ausstattung,
- Figur 4: die Einzelheit "Y" nach Fig. 1,
- Figur 5: die Einzelheit "Z" nach Fig. 2,
- Figur 6: die erfindungsgemäße Verbindungsanordnung in einer weiteren Ausgestaltung.

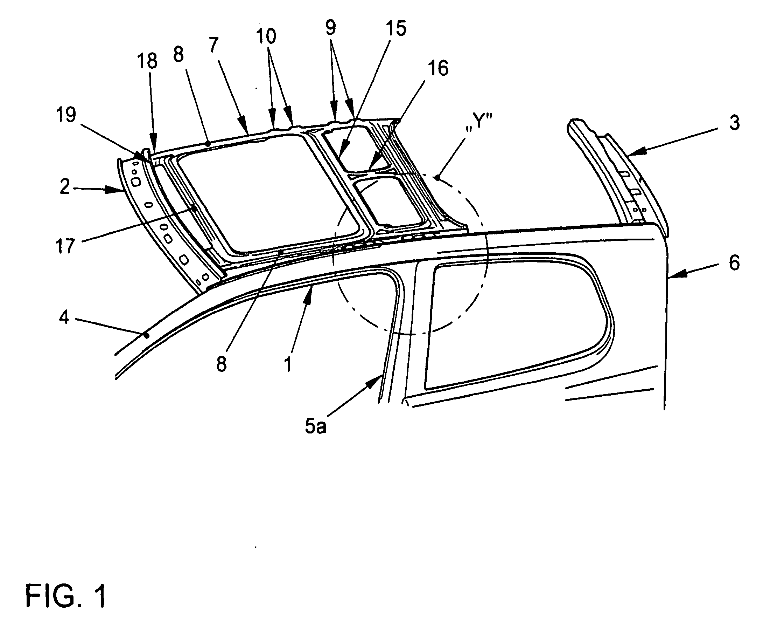

Fig. 1 zeigt den Dachbereich eines Personenkraftwagens einer 2-türigen Ausstattung, wobei sich ein Dachrahmen, bestehend aus an sich bekannten seitlich angeordneten Dachrahmenlängsträgerelementen 1 (vorliegend lediglich das linke Dachrahmenlängsträgerelement 1 dargestellt), die vermittels Dachrahmenquerträgerelementen 2; 3 zu einem geschlossenen Dachrahmen verbindbar bzw. verbunden sind. Besagter Dachrahmen stützt sich auf Säulen, vorliegend A-Säulen 4, B-Säulen 5a und C-Säulen 6 der Kraftfahrzeugkarosserie ab.

Innerhalb der vom Dachrahmen umschlossenen Dachfläche ist ein geschlossener Verstärkungsrahmen 7 angeordnet, der seinerseits ein an sich bekanntes und nicht näher dargestelltes Sonderdach, wie ein Schiebedach, Faltdach, Panoramadach, Aufstelldach o. dgl. aufnehmen soll.

Vorzugsweise weist der Verstärkungsrahmen 7 offene und/oder geschlossene Hohlprofilquerschnitte auf und ist ein- oder mehrteilig ausgebildet sowie aus Metall und/oder Kunststoff gefertigt.

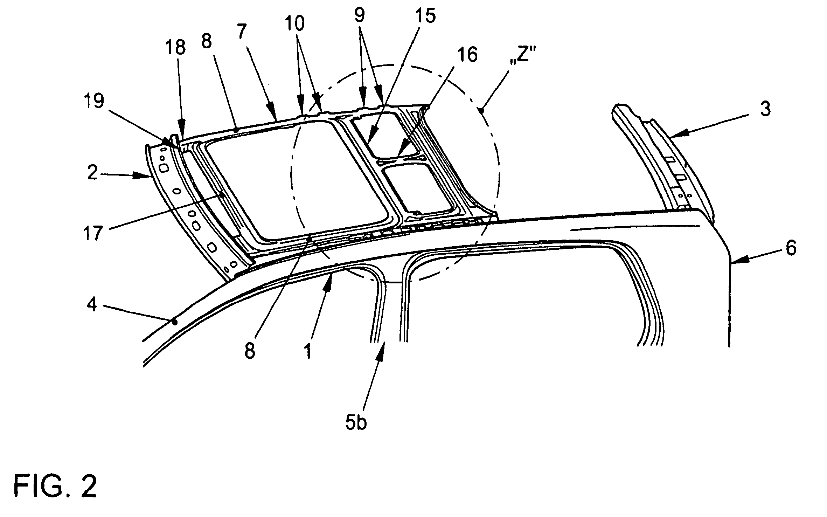

Fig. 2 zeigt gleichfalls den Dachbereich eines Personenkraftwagens mit einem Verstärkungsrahmen 7, jedoch, wie unschwer zu erkennen ist, den Dachbereich einer 4-türigen Ausstattung eines gleichen Fahrzeugmodells, dessen B-Säule 5b im Vergleich zur 2-türigen Ausstattung weiter nach vorn versetzt ist.

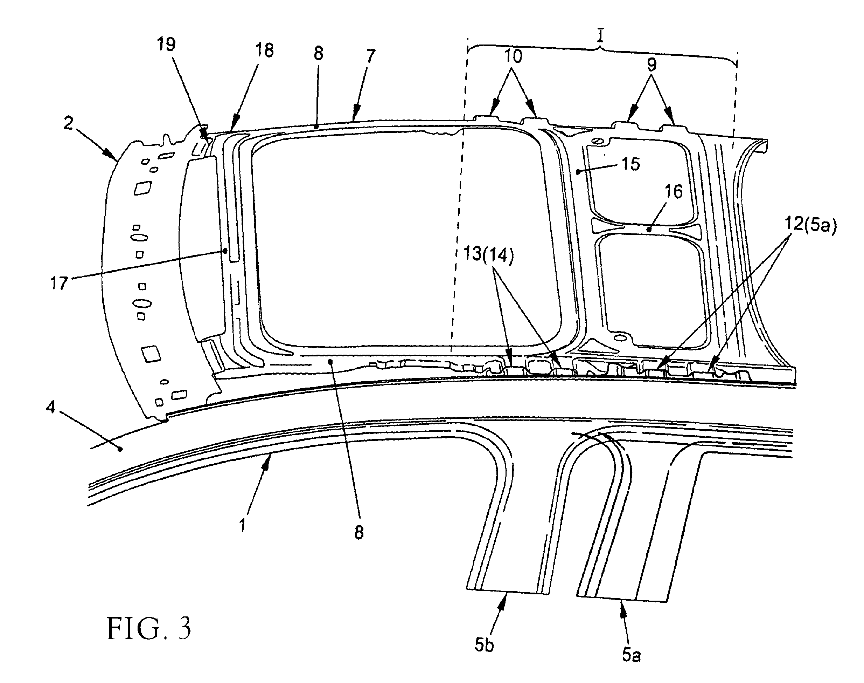

In Fig. 3 sind die beiden vorerwähnten Ausstattungen zum besseren Verständnis überlappt dargestellt.

Um nunmehr eine verbesserte und kostengünstige Verbindungsanordnung im Dachbereich eines Personenkraftwagens zu schaffen sowie einen hohen Crashwiderstand derselben zu erzielen, sind, wie in den Fig. 3, 4 und 5 besonders gut ersichtlich, die beiden äußeren Längsträger 8 des Verstärkungsrahmens 7 erfindungsgemäß jeweils in einem Bereich, der sich über einen Anbindungsbereich "I" an die Kraftfahrzeugkarosserie in Höhe der B-Säule 5a; 5b sowohl der 2-türigen als auch der 4-türigen Ausstattung eines gleichen oder vergleichbaren Fahrzeugmodells erstreckt, mit sickenförmig ausgebildeten Auflageflächen 9; 10 versehen, deren rinnenförmige Vertiefungen 11 in Fahrzeugquerrichtung weisen.

Hierbei stützt sich wenigstens eine der Auflageflächen 9 bzw. 10 auf wenigstens einer zur Fahrzeugmitte hin abgestellten korrespondierenden sickenförmigen Auflagefläche 12 bzw. 13 der Kraftfahrzeugkarosserie der 2-türigen respektive der 4-türigen Ausstattung formschlüssig ab.

Durch diese erfindungsgemäße Maßnahme bzw. die erfindungsgemäße Verbindungsanordnung ist, wie bereits oben dargetan, die Möglichkeit gegeben, den Verstärkungsrahmen 7 zu vereinheitlichen, wodurch erhebliche Kostenvorteile sowohl während der Herstellung der Verstärkungsrahmen 7 als auch dessen Montage resultieren.

Die korrespondierenden Auflageflächen 12; 13 der Kraftfahrzeugkarosserie können durch die B-Säulen 5a; 5b und/oder durch innere Seitenteile 14 gebildet sein.

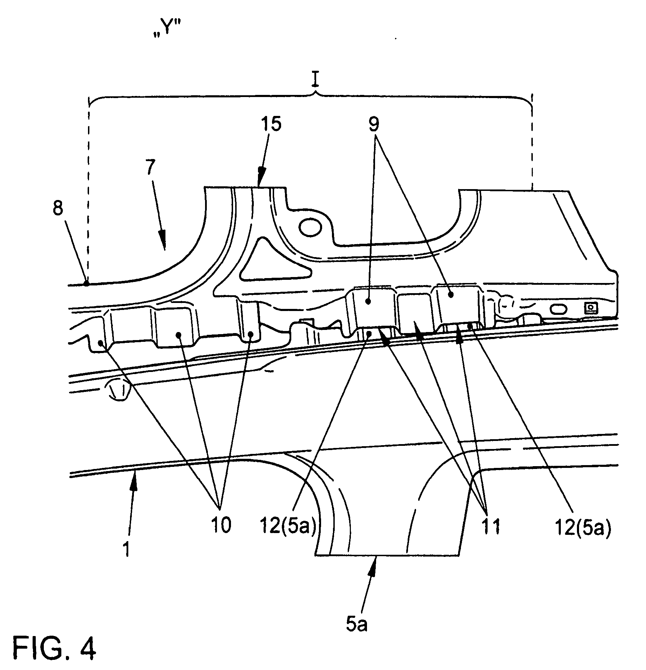

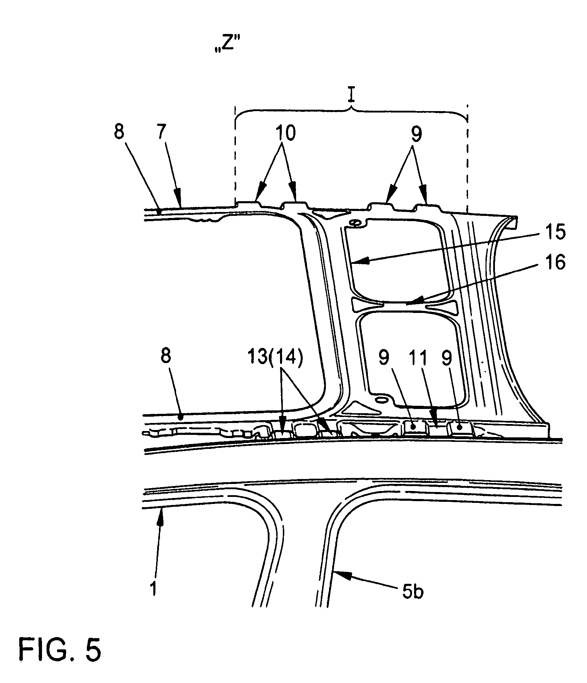

In einer bevorzugten Ausführung sind bei der 2-türigen Ausstattung die Auflageflächen 12 durch die B-Säule 5a (Fig. 3 und 4) und bei der 4-türigen Ausstattung durch ein inneres Seitenteil 14 (Fig. 3 und 5) gebildet.

Ferner sind die jeweils aktuell miteinander korrespondierenden Auflageflächen 9 und 12 bzw. 10 und 13 untereinander durch Stoffschluß, wie schweißen und/oder Kleben, und/oder vermittels nicht näher dargestellter mechanischer Befestigungsmittel, wie Schrauben, Niete, Clinche o. ä. und/oder infolge Formschluß fest verbunden.

Als bemerkenswert ist des Weiteren herauszustellen, dass durch die sickenförmige Ausgestaltung der Auflageflächen 9; 10; 12; 13 in Fahrzeugquerrichtung eine besonders hohe Quersteifigkeit und Festigkeit des erfindungsgemäß ausgebildeten Dachbereiches festzustellen ist.

Ferner sind die Auflageflächen 9; 10 der Längsträger 8 des Verstärkungsrahmens 7 und die Auflageflächen 12; 13 der Kraftfahrzeugkarosserie derart zueinander angeordnet, dass im Falle eines Crashereignisses und einer daraus resultierenden Relativbewegung der ursprünglich miteinander korrespondierenden Auflageflächen 9 und 12 bzw. 10 und 13 zueinander in Fahrzeuglängsrichtung, welches beispielsweise aus einem Frotal- und/oder Heckcrash und einem sich ggf. anschließenden Bruch der festen Verbindung zwischen denselben resultieren kann, die Auflageflächen 12 bzw. 13, Crashenergie verzehrend, in die ursprünglich freien sickenförmig ausgebildeten Auflageflächen 9 bzw. 10 des Längsträgers 8 des Verstärkungsrahmens 7 formschlüssig eingreifen, sich sozusagen ineinander verhaken.

An Fig. 5 (4-türige Ausstattung) soll dieses beispielhaft näher erläutert werden.

Gesetzt den Fall, es ist ein Frontal- und/oder Heckcrash zu verzeichnen und die feste Verbindung zwischen den Auflageflächen 10 und 13 bricht, so könnte der Verstärkungsrahmen 7 beispielsweise im Verhältnis zur B-Säule 5b eine Relativbewegung nach Links vollführen. In diesem Fall würden die Auflageflächen 13 der Kraftfahrzeugkarosserie, Crashenergie verzehrend, formschlüssig in die Auflageflächen 9 des betreffenden Längsträgers 8 des Verstärkungsrahmens 7 eingreifen.

Um auch einem Umstand gerecht zu werden, bei dem in Anlehnung an vorstehendes Beispiel der Verstärkungsrahmen 7 im Verhältnis zur B-Säule 5b eine Relativbewegung nach Rechts vollführt, kann es angezeigt sein, die Längsträger 8 des Verstärkungsrahmens 7 und/oder die Kraftfahrzeugkarosserie über den Anbindungsbereich "I" hinaus mit sickenförmig ausgebildeten Auflageflächen zu versehen, die im Falle eines Crashereignisses infolge einer Relativbewegung mit den innerhalb des Anbindungsbereiches "I" angeordneten Auflageflächen 9; 10; 12 und/oder 13 oder untereinander in Formschluß treten (nicht näher dargestellt).

Es bestände somit die Möglichkeit, bei Betrachtung der Fig. 5 links neben der B-Säule 5b am Längsträger 8 des Verstärkungsrahmens 7 und/oder rechts der B-Säule 5b am Dachrahmenlängsträgerelement 1 respektive an einem inneren Seitenteil 14 desselben weitere Auflageflächen vorzusehen, die mit den vorhandenen in Formschluß treten können.

Zur weiteren Verbesserung der Steifigkeit des Dachbereiches, insbesondere Quersteifigkeit, bzw. Festigkeit desselben, ist dem Verstärkungsrahmen 7 wenigstens im Anbindungsbereich "I" der 2-türigen und 4-türigen Ausstattung ein weiteres Querträgerelement 15 zugeordnet.

Vorliegend ist der Verstärkungsrahmen 7 durch ein solchen Querträgerelement 15 in zwei Felder aufgeteilt, wobei das rechte Feld, obendrein noch durch ein Mittenlängsträgerelement 16 verstärkt ist (insbes. Fig. 1 bis 3).

Fernerhin kann es gem. den Fig. 1 bis 3 angezeigt sein, dem Verstärkungsrahmen 7 im Bereich seines vorderen Querträgers 17 ein oder mehrere, vorliegend zwei Auflageflächen/-laschen 18 zuzuordnen, die sich ihrerseits auf korrespondierenden Auflageflächen/-laschen 19 des vorderen Dachrahmenquerträgerelements 2 des Dachrahmens abstützen und untereinander beispielsweise vermittels an sich bekannter mechanischer Befestigungsmittel und/oder durch Stoffschluß, wie Schweißung oder Klebung, und/oder infolge Formschluß fest verbunden sind.

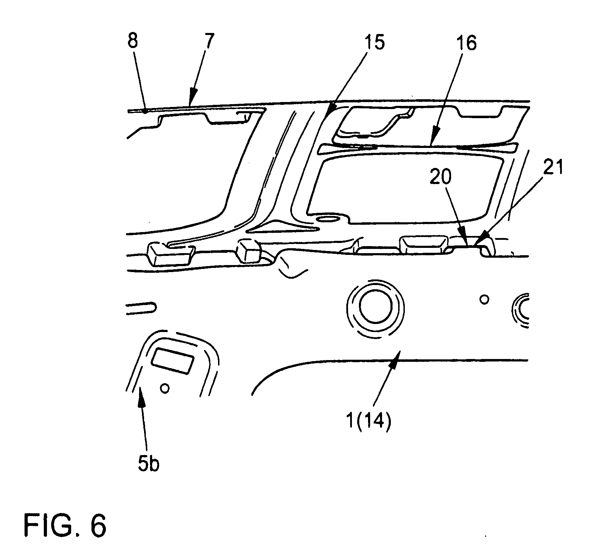

Des Weiteren hat es sich als zweckmäßig erwiesen, den Verstärkungsrahmen 7, insbesondere bei Verbau desselben in einen Personenkraftwagen einer 4-türigen Ausstattung, auch im hinteren Dachbereich abzustützen, nämlich derart, dass dem Verstärkungsrahmen 7 im hinteren äußeren Bereich der äußeren Längsträger 8 desselben ein oder mehrere Auflageflächen/-laschen 20 zugeordnet sind, die sich ihrerseits auf korrespondierenden Auflageflächen/-laschen 21 der Dachrahmenlängsträgerelemente 1 der Kraftfahrzeugkarosserie abstützen (Fig. 6).

Durch vorstehende Maßnahmen werden insbesondere Relativbewegungen zwischen dem Dachrahmen und dem Verstärkungsrahmen 7 und demgemäß Klappergeräusche vermieden. Ferner tragen diese Maßnahmen ebenfalls zur Erhöhung der Steifigkeit der Gesamtkarosserie bei.

## Patentansprüche

1. Kraftfahrzeug mit einer Verbindungsanordnung im Dachbereich, wobei sich ein Dachrahmen, bestehend aus seitlich angeordneten Dachrahmenlängsträgerelementen (1), die vermittels Dachrahmenquerträgerelementer (2,3) zu einem geschlossenen Rahmen verbunden sind, auf Säulen der Kraftfahrzeugkarosserie abstützt und innerhalb der vom Dachrahmen umschlossenen Dachfläche ein Verstärkungsrahmen (7) zur Aufnahme eines Sonderdaches angeordnet ist,
**dadurch gekennzeichnet, dass**
äußere Längsträger (8) des Verstärkungsrahmens (7) jeweils in einem Bereich, der sich über einen Anbindungsbereich "I" an die Kraftfahrzeugkarosserie in Höhe einer B-Säule (5a; 5b) sowohl einer 2-türigen als auch einer 4-türigen Ausstattung eines gleichen oder vergleichbaren Fahrzeugmodells erstreckt, mit sickenförmig ausgebildeten Auflageflächen (9; 10) versehen sind, deren rinnenförmige Vertiefungen (11) in Fahrzeugquerrichtung weisen, wobei sich wenigstens jeweils eine der Auflageflächen (9; 10) auf wenigstens einer zur Fahrzeugmitte hin abgestellten korrespondierenden sickenförmigen Auflagefläche (12; 13) der Kraftfahrzeugkarosserie der 2-türigen respektive der 4-türigen Ausstattung formschlüssig abstützt.

2. Kraftfahrzeug mit einer Verbindungsanordnung nach Anspruch 1, **dadurch gekennzeichnet, dass** die korrespondierenden Auflageflächen (12; 13) der Kraftfahrzeugkarosserie durch die B-Säule (5a; 5b) und/oder innere Seitenteile (14) gebildet sind.

3. Kraftfahrzeug mit einer Verbindungsanordnung nach einem der Ansprüche 1 und 2, **dadurch gekennzeichnet, dass** die aktuell miteinander korrespondierenden Auflageflächen (9, 12; 10, 13) untereinander durch Stoffschluß, wie schweißen und/oder kleben, und/oder vermittels mechanischer Befestigungsmittel und/oder infolge Formschluß verbunden sind.

4. Kraftfahrzeug mit einer Verbindungsanordnung nach einem der Ansprüche 1 bis 3, **dadurch gekennzeichnet, dass** die Auflageflächen (9; 10) der Längsträger (8) des Verstärkungsrahmens (7) und die Auflageflächen (12; 13) der Kraftfahrzeugkarosserie derart zueinander angeordnet sind, dass im Falle eines Crashereignisses und einer daraus resultierenden Relativbewegung der ursprünglich miteinander korrespondierenden Auflageflächen (9, 12; 10, 13) zueinander in Fahrzeuglängsrichtung, die Auflageflächen (12; 13) der Kraftfahrzeugkarosserie, Crashenergie verzehrend, in die ursprünglich freien sickenförmig ausgebildeten Auflageflächen (9; 10) der Längsträger (8) des Verstärkungsrahmens (7) formschlüssig eingreifen.

5. Kraftfahrzeug mit einer Verbindungsanordnung nach Anspruch 4, **dadurch gekennzeichnet, dass** die Längsträger (8) des Verstärkungsrahmens (7) und/oder die Kraftfahrzeugkarosserie über den Anbindungsbereich "I" hinaus über sickenförmig ausgebildete Auflageflächen verfügen, die im Falle eines Crashereignisses infolge einer Relativbewegung mit den innerhalb des Anbindungsbereiches "I" angeordneten Auflageflächen (9; 10; 12; 13) oder untereinander in Formschluß treten.

6. Kraftfahrzeug mit einer Verbindungsanordnung nach einem der Ansprüche 1 bis 5, **dadurch gekennzeichnet, dass** dem Verstärkungsrahmen (7) wenigstens im Anbindungsbereich "I" der 2-türigen und 4-türigen Ausstattung ein weiteres Querträgerelement (15) zugeordnet ist.

7. Kraftfahrzeug mit einer Verbindungsanordnung nach einem der Ansprüche 1 bis 6, **dadurch gekennzeichnet, dass** dem Verstärkungsrahmen (7) im Bereich seines vorderen Querträgers (17) ein oder mehrere Auflageflächen/-laschen (18) zugeordnet sind, die sich ihrerseits auf korrespondierenden Auflageflächen/-laschen (19) des vorderen Dachrahmenquerträgerelementes (2) des Dachrahmens abstützen.

8. Kraftfahrzeug mit einer Verbindungsanordnung nach einem der Ansprüche 1 bis 7, **dadurch gekennzeichnet, dass** dem Verstärkungsrahmen (7) im hinteren Bereich der äußeren Längsträger (8) desselben ein oder mehrere Auflageflächen/-laschen (20) zugeordnet sind, die sich ihrerseits auf korrespondierenden Auflageflächen/-laschen (21) der Dachrahmenlängsträgerelemente (1) der Kraftfahrzeugkarosserie abstützen.

9. Kraftfahrzeug mit einer Verbindungsanordnung nach einem der Ansprüche 1 bis 8, **dadurch gekennzeichnet, dass** der Verstärkungsrahmen (7) offene und/oder geschlossene Hohlprofilquerschnitte aufweist.

10. Kraftfahrzeug mit einer Verbindungsanordnung nach einem der Anspruche 1 bis 9, **dadurch gekennzeichnet, dass** der Verstärkungsrahmen (7) ein- oder mehrteilig ausgebildet und aus Metall und/oder aus Kunststoff gefertigt ist.

## Claims

1. Vehicle with a roof connection assembly, a roof frame, comprising laterally arranged roof frame longitudinal member elements (1) which are connected by means of roof frame transverse member elements (2, 3) to form a closed frame, being supported on pillars of the vehicle body and a reinforcing frame (7) for receiving a separate roof being arranged within the roof surface enclosed by the roof frame, **characterized in that** outer longitudinal members (8) of the reinforcing frame (7) are provided in each case in a region extending over an "I" connecting region to the vehicle body level with a B-pillar (5a; 5b) both of a 2-doored and also a 4-doored version of an identical or comparable vehicle model with supporting surfaces (9; 10) of bead-shaped design, the channel-shaped depressions (11) of which point in the transverse direction of the vehicle, with at least in each case one of the supporting surfaces (9; 10) being supported in a form-fitting manner on at least one corresponding, bead-shaped supporting surface (12; 13), which is placed towards the centre of the vehicle, of the vehicle body of the 2-doored or the 4-doored version.

2. Vehicle with a connection assembly according to Claim 1, **characterized in that** the corresponding supporting surfaces (12; 13) of the vehicle body are formed by the B-pillar (5a; 5b) and/or inner side parts (14).

3. Vehicle with a connection assembly according to either of Claims 1 and 2, **characterized in that** the supporting surfaces (9, 12; 10, 13) currently corresponding to one another are connected to one another by a connection using a cohesive material joint, such as welding and/or adhesive bonding, and/or by means of mechanical fastening means and/or as a consequence of a form-fitting connection.

4. Vehicle with a connection assembly according to one of Claims 1 to 3, **characterized in that** the supporting surfaces (9; 10) of the longitudinal members (8) of the reinforcing frame (7) and the supporting surfaces (12; 13) of the vehicle body are arranged with respect to one another in such a manner that, in the event of a crash event and a resultant movement of the supporting surfaces (9, 12; 10, 13), originally corresponding to one another, relative to one another in the longitudinal direction of the vehicle, the supporting surfaces (12; 13) of the vehicle body engage in a form-fitting manner, consuming crash energy, in the supporting surfaces (9; 10), which are originally free and are of bead-shaped design, of the longitudinal members (8) of the reinforcing frame (7).

5. Vehicle with a connection assembly according to Claim 4, **characterized in that** the longitudinal members (8) of the reinforcing frame (7) and/or the vehicle body beyond the "I" connecting region have supporting surfaces which are of bead-shaped design and, which in the event of a crash event, enter as a consequence of a relative movement into a form-fitting connection with the supporting surfaces (9; 10; 12; 13) arranged within the "I" connecting region or with one another.

6. Vehicle with a connection assembly according to one of Claims 1 to 5, **characterized in that** the reinforcing frame (7) is assigned a further transverse member element (15) at least in the "I" connecting region of the 2-doored and 4-doored-version.

7. Vehicle with a connection assembly according to one of Claims 1 to 6, **characterized in that** in the region of its front transverse member (17) the reinforcing frame (7) is assigned one or more supporting surfaces/tabs (18) which, for their part, are supported on corresponding supporting surfaces/tabs (19) of the front roof frame transverse member element (2) of the roof frame.

8. Vehicle with a connection assembly according to one of Claims 1 to 7, **characterized in that** the reinforcing frame (7) is assigned, in the rear region of the outer longitudinal members (8) of the same, one or more supporting surfaces/tabs (20) which, for their part, are supported on corresponding supporting surfaces/tabs (21) of the roof frame longitudinal member elements (1) of the vehicle body.

9. Vehicle with a connection assembly according to one of Claims 1 to 8, **characterized in that** the reinforcing frame (7) has open and/or closed hollow profile cross sections.

10. Vehicle with a connection assembly according to one of Claims 1 to 9, **characterized in that** the reinforcing frame (7) is of single- or multi-part design and is manufactured from metal and/or from plastic.

## Revendications

1. Véhicule automobile avec un agencement d'assemblage dans la région du toit, sachant qu'un cadre de toit, constitué d'éléments porteurs longitudinaux (1) de cadre de toit disposés latéralement qui sont reliés en un cadre fermé au moyen d'éléments porteurs transversaux (2, 3) de cadre de toit, s'appuie sur des montants de la carrosserie du véhicule automobile, et qu'un cadre de renforcement (7) destiné à recevoir un toit spécial est disposé à l'intérieur de la surface de toit délimitée par le cadre de toit, **caractérisé en ce que** des longerons extérieurs (8) du cadre de renforcement (7) sont respectivement pourvus, dans une région qui s'étend sur une région « I » de rattachement à la carrosserie du véhicule automobile à hauteur d'un montant B (5a ; 5b) tant d'une version 2 portes que d'une version 4 portes d'un modèle de véhicule identique ou comparable, de surfaces d'appui (9 ; 10) réalisées en forme de moulures dont les renfoncements (11) en forme de gouttières sont dirigés dans la direction transversale du véhicule, sachant qu'au moins une des surfaces d'appui (9 ; 10) s'appuie respectivement en engagement positif sur au moins une surface d'appui correspondante (12 ; 13) en forme de moulure, en retrait en direction du milieu du véhicule, de la carrosserie de véhicule automobile de la version 2 portes ou 4 portes respective.

2. Véhicule automobile avec un agencement d'assemblage selon la revendication 1, **caractérisé en ce que** les surfaces d'appui correspondantes (12 ; 13) de la carrosserie du véhicule automobile sont formées par les montants B (5a ; 5b) et/ou par des éléments latéraux intérieurs (14).

3. Véhicule automobile avec un agencement d'assemblage selon la revendication 1 ou 2, **caractérisé en ce que** les surfaces d'appui (9, 12 ; 10, 13) effectivement mutuellement correspondantes sont mutuellement assemblées par liaison de matière (soudage et/ou collage par exemple), et/ou à l' aide de moyens de fixation mécaniques et/ou par engagement positif.

4. Véhicule automobile avec un agencement d'assemblage selon l'une quelconque des revendications 1 à 3, **caractérisé en ce que** les surfaces d'appui (9 ; 10) des longerons (8) du cadre de renforcement (7) et les surfaces d'appui (12 ; 13) de la carrosserie du véhicule automobile sont disposées les unes par rapport aux autres de telle sorte qu'en cas de collision et du mouvement relatif qui en résulte des surfaces d'appui (9, 12 ; 10, 13) initialement mutuellement correspondantes dans la direction longitudinale du véhicule, les surfaces d'appui (12 ; 13) de la carrosserie du véhicule automobile s'engagent positivement, en dispersant l'énergie de collision, dans les surfaces d'appui en forme de moulures (9 ; 10) initialement libres des longerons (8) du cadre de renforcement (7).

5. Véhicule automobile avec un agencement d'assemblage selon la revendication 4, **caractérisé en ce que** les longerons (8) du cadre de renforcement (7) et/ou la carrosserie du véhicule automobile disposent au-delà de la région de rattachement « I » de surfaces d'appui réalisées en forme de moulures qui, en cas de collision, suite à un mouvement relatif, entrent en engagement positif entre elles ou avec les surfaces d'appui (9 ; 10 ; 12 ; 13) disposées à l'intérieur de la région de rattachement « I ».

6. Véhicule automobile avec un agencement d'assemblage selon l'une quelconque des revendications 1 à 5, **caractérisé en ce qu'**un élément porteur transversal supplémentaire (15) est associé au cadre de renforcement (7) au moins dans la région de rattachement « I » de la version 2 portes et de la version 4 portes.

7. Véhicule automobile avec un agencement d'assemblage selon l'une quelconque des revendications 1 à 6, **caractérisé en ce qu'**une ou plusieurs surfaces/pattes d'appui (18) sont associées au cadre de renforcement (7) dans la région de sa traverse avant (17), qui s'appuient elles-mêmes sur des surfaces/pattes d'appui correspondantes (19) de l'élément porteur transversal avant (2) du cadre de toit.

8. Véhicule automobile avec un agencement d'assemblage selon l'une quelconque des revendications 1 à 7, **caractérisé en ce qu'**une ou plusieurs surfaces/pattes d'appui (20) sont associées au cadre de renforcement (7) dans la région arrière des longerons extérieurs (8) de ce dernier, qui s'appuient elles-mêmes sur des surfaces/pattes d'appui correspondantes (21) des éléments porteurs longitudinaux (1) de cadre de toit de la carrosserie du véhicule automobile.

9. Véhicule automobile avec un agencement d'assemblage selon l'une quelconque des revendications 1 à 8, **caractérisé en ce que** le cadre de renforcement (7) présente des sections ouvertes et/ou fermées de profilé creux.

10. Véhicule automobile avec un agencement d'assemblage selon l'une quelconque des revendications 1 à 9, **caractérisé en ce que** le cadre de renforcement (7) est réalisé en une ou plusieurs parties et est fabriqué en métal et/ou en matière plastique.
